# EUROPÄISCHE PATENTANMELDUNG

(11) **EP 3 566 966 A1**
(43) Veröffentlichungstag der Anmeldung: **13.11.2019**
(21) Anmeldenummer: 18171290.2
(22) Anmeldetag: 08.05.2018
(51) Int. Cl.: B65D 19/18, B65D 85/76, A01J 25/16

(54) **TRANSPORT- UND LAGERVORRICHTUNG FÜR DIE KÄSEREIFUNG**

(71) Anmelder: Schoeller Allibert GmbH, 19057 Schwerin (DE)
(72) Erfinder: BRINKERS, Erik, 7825 TT Emmen (NL); VINKE, Jan, 7881 XA Emmer Compascuum (NL); HUIZINGH, John, 9541 AH Vlagtwedde (NL)
(74) Vertreter: Winter, Brandl, Fürniss, Hübner, Röss, Kaiser, Polte - Partnerschaft mbB

(57) **Zusammenfassung**

Die vorliegende Offenbarung betrifft eine Transport- und Lagervorrichtung (2) für die Käsereifung mit einer horizontalen Lagerplatte (4), die von einer Anzahl vertikaler, nach oben und nach unten über die Lagerplatte überstehender Stützelementen (6, 8) stelzenartig getragen wird und zumindest einer Randleiste (10) zwischen benachbarten Säulen zur seitlichen Sicherung von auf der Lagerplatte (4) platziertem Käse; wobei
zumindest eine der Säulen (6, 8) an ihrem oberen und an ihrem unteren Ende ein Paar komplementärer Stapelgeometrien (12, 14) aufweist, die dazu ausgebildet sind, in entsprechende Stapelgeometrien (12', 14') einer baugleichen oder ähnlichen Transport- und Lagervorrichtungen (2') formschlüssig einzugreifen.

## Beschreibung

### Technisches Gebiet

Die vorliegende Offenbarung betrifft eine Transport- und Lagervorrichtung, ein modulares Transport- und Lagersystem sowie ein Verfahren für die Käsereifung.

### Stand der Technik

Während der Käsereifung werden Käselaibe zur effizienten Raumausnutzung in Regalen gelagert. Die Käselaibe liegen dabei mit einer ihrer Oberflächen auf den jeweiligen Regalplatten. Um eine korrekte und gleichmäßige Käsereifung herbeizuführen, müssen die Laibe deshalb wöchentlich gewendet werden, was bislang händisch geschieht. Hierdurch gestaltet sich die Käsereifung sehr aufwendig. Auch der Transport eines derart gelagerten Käses ist vergleichsweise umständlich, da der Käse zunächst dem Regal entnommen und in spezialisierte Käsetransportbehälter gefüllt werden muss. Zudem haben sich vorstehend beschriebene Regalsysteme als schwer zu reinigen erwiesen.

Es besteht also ein Bedarf nach einer Transport- und Lagervorrichtung, insbesondere für ein modulares Transport- und Lagersystem, die ein verbessertes Handling bei der Käsereifung und eine verbesserte Reinigbarkeit bereitstellt.

Die vorstehend beschriebenen Aufgaben werden durch eine Transport- und Lagervorrichtung gemäß dem unabhängigen Patentanspruch 1 sowie durch ein Transport- und Lagersystem gemäß dem unabhängigen Patentanspruch 11 gelöst. Vorteilhafte Weiterbildungen der Erfindung sind Gegenstand der Unteransprüche.

Grundsätzlich hat eine erfindungsgemäße Transport- und Lagervorrichtung für die Käsereifung eine horizontalen Lagerplatte, die ähnlich einem Regalbrett eine Lagerfläche für Käse ausbildet, eine Anzahl vertikaler, nach oben und nach unten über die Lagerplatte überstehender Stützelemente, vorzugsweise Säulen, die die Lagerplatte stelzenartig tragen, und zumindest eine Randleiste, die zwischen benachbarten Stützelementen / Säulen verlaufend angeordnet ist und zur seitlichen Sicherung von auf der Lagerplatte platziertem Käse dient. Die erfindungsgemäße Transport- und Lagervorrichtung ist zudem stapelbar ausgeführt. Hierzu weist sie an zumindest einem der Stützelemente (einer der Säulen), genauer gesagt jeweils am oberen und am unteren Ende des besagten zumindest einen Stützelementes, ein Paar komplementärer Stapelgeometrien auf. Diese sind dazu ausgebildet, in entsprechende Stapelgeometrien von baugleichen oder ähnlichen Transport- und Lagervorrichtungen formschlüssig einzugreifen und durch diesen formschlüssigen Eingriff insbesondere ein Verrutschen aufeinander gestapelter Transport- und Lagervorrichtungen in horizontaler Richtung relativ zueinander zu unterbinden.

Bevorzugt können die Stützelemente säulenartig ausgebildet sein. Alternativ können die Stützelemente jedoch auch andere Formen annehmen, bspw. eine Fuß-, Rahmen- oder Kufenform. Wichtig ist, dass das die Stützelemente nach oben und nach unten über die Lagerplatte überstehen, und dass zwischen den Stützelementen die Randleisten verlaufen.

Die erfindungsgemäße Transport- und Lagervorrichtung kann also säulenartig gestapelt werden und bildet so ein modulares Käseregal aus. Man könnte auch sagen, dass die einzelnen Transport- und Lagervorrichtung die Funktion bislang bekannter Käse-Trays übernehmen und sich zusätzlich zu einem modularen Regalsystem aufstapeln lassen. Die beidseitig vorspringenden Stützelemente (Säulen, Füße, etc) machen den erfindungsgemäßen Behälter zwei-seitig verwendbar. Die Käselaibe sind zudem durch die Randleisten in dem so gebildeten Regal gesichert und dieses kann im Ganzen maschinell gewendet werden. Ein händisches Wenden der einzelnen Käselaibe entfällt somit. Da die Stützelemente / Säulen der einzelnen Transport- und Lagervorrichtung jeweils nach oben und nach unten über die Lagerplatten überstehen, ist auch bei einem Stapel solcher Transport- und Lagervorrichtungen nach oben und nach unten ein entsprechender Überstand vorhanden. Dies hat den Effekt, dass sowohl in einer ersten als auch in einer zweiten, zu der ersten umgekehrten Orientierung des Stapels die jeweils unterste Lageplatte nicht auf dem Boden aufliegt, sondern wegen des durch den Überstand gebildeten Luftspaltes von unten belüftet werden kann.

Gemäß einer bevorzugten Ausführungsform kann die Lagerplatte rechteckförmig ausgebildet sein und zumindest von vier in ihren Ecken angeordneten Eckstützen / Ecksäulen getragen werden. Bevorzugt können an zumindest zwei gegenüberliegenden Rändern der Lagerplatte, insbesondere mittig zwischen den Eckstützen / Ecksäulen, zwei weitere Stützelemente / Säulen vorgesehen sein. Vorzugsweise können die Säulen als Hohlsäulen ausgebildet sein.

Gemäß einem weiteren Aspekt der Erfindung kann die zumindest eine Randleiste sich zwischen zwei Ecksäulen erstrecken, also eine komplette Seite der Lagerplatte sichern/abschirmen. Besonders bevorzugt können zu allen vier Seiten einer rechteckigen Lagerplatte Randleisten vorgesehen sein. Dies verhindert ein Herausfallen des in der Transport- und Lagervorrichtung gelagerten Käses beim Wenden einer Säule gestapelter Transport- und Lagervorrichtungen.

Bevorzugt können die Randleisten mit ihren Innenflächen bündig zu den Innenflächen der Säulen ausgebildet sein, sodass Säulen und Randleisten in einer Draufsicht einen rechteckigen Käfig definieren. Auf diese Weise können Eindruckstellen im Käserand vermieden werden.

Gemäß einem weiteren bevorzugten Ausführungsbeispiel der Erfindung kann die zumindest eine Randleiste mit einem vertikalen Abstand zur Bodenplatte zwischen den Ecksäulen verlaufend angeordnet sein, sodass ein vorbestimmter Spalt zwischen der Lagerplatte und der Randleiste definiert wird. Dies ermöglicht eine sichere Halterung des Käses in der Transport- und Lagervorrichtung bei gleichzeitig hoher Exposition zur Umgebungsluft.

Gemäß einem weiteren Aspekt der Erfindung können die Säulen in horizontaler Richtung über den Rand der Lagerplatte vorspringen. Die Säulen können also in einer Draufsicht auf die Lagerfläche(n) der Lagerplatte über den Rand der Lagerplatte nach außen hin vorspringen. Dies erzeugt eine zusätzliche Abschirmung der Transport- und Lagervorrichtung zur Seite hin.

Gemäß einer weiter bevorzugten Ausführungsform können in der zumindest einen Randleiste Lüftungsschlitze vorgesehen sein, um die Luftzufuhr zum Käse weiter zu verbessern.

Gemäß einem weiter bevorzugten Ausführungsbeispiel der Erfindung kann die Randleiste in vertikaler Richtung derart angeordnet sein, dass sie beim Stapeln zweier baugleicher Transport- und Lagervorrichtungen sowohl zur Lagerplatte derselben Transport- und Lagervorrichtung als auch zur Lagerplatte der darüber gestapelten Transport- und Lagervorrichtung beabstandet ist, sodass oberhalb und unterhalb der Randleiste ein Luftspalt gebildet ist. Bevorzugt kann die Randleiste vertikal derart angeordnet sein, dass sie mittig zwischen den Lagerplatten zweier gestapelter, baugleicher Transport- und Lagervorrichtungen positioniert ist.

Gemäß einer weiter bevorzugten Ausführungsform kann die Lagerplatte perforiert oder gitterrostförmig ausgebildet sein, um auch die aufliegende Fläche eines Käselaibes zu belüften. Besonders bevorzugt können die Ober- und Unterseite der Lagerplatte jeweils identische Lagerflächen ausbilden, sodass die Form der Auflagefläche für den Käse sich beim Wenden eines Stapels von Transport- und Lagervorrichtungen nicht ändert.

Gemäß einem weiteren bevorzugten Ausführungsbeispiel der Erfindung können die Lagerplatte, die Säulen und Randleiste stoffeinstückig hergestellt sein. In anderen Worten kann die gesamte Transport- und Lagervorrichtung vorzugsweise in einem Stück gefertigt werden und insbesondere aus einem Kunststoff, besonders bevorzugt aus einem Thermoplast, hergestellt sein. Hierzu eigenen sich in besonderem Maße Spritzguss- oder Rotomoulding- oder additive Verfahren.

Ein weiterer Aspekt der Erfindung betrifft ein modulares Transport- und Lagersystem für die Käsereifung mit einer Anzahl von Transport- und Lagervorrichtung gemäß einem der vorgenannten Aspekte.

Gemäß einer bevorzugten Ausbildungsform eines solchen Transport- und Lagersystems kann zudem zumindest eine Palette vorgesehen sein, die dazu ausgebildet ist, einen formschlüssigen Eingriff mit den Säulenfüßen, vorzugsweise sowohl den Säulenfüßen als auch den oberen Säulenenden, der Transport- und Lagervorrichtungen einzugehen. In anderen Worten kann ein erfindungsgemäßes Transport- und Lagersystem eine Palette und eine Säule darauf gestapelter Transport- und Lagervorrichtungen (Trays) aufweisen, wobei jede dieser Komponenten konstruktiv dazu angepasst ist mit der jeweils direkt benachbarten Komponente einen Stapeleingriff einzugehen. Ein solches System mit angepasster Palette ermöglicht ein einfacheres Handling des gesamten Systems mittels Flurförderzeugen.

Gemäß einer bevorzugten Ausführungsform kann die Palette dazu angepasst sein, mehrere Stapel von Transport- und Lagervorrichtungen (z.B. vier im Karree angeordnete) aufzunehmen. Dies ermöglicht ein automatisiertes Wenden einer größeren Anzahl von Transport- und Lagervorrichtungen in einem einzelnen Handling-Schritt.

Gemäß einer weiter bevorzugten Ausführungsform kann das Transport- und Lagersystem eine zweite Palette aufweisen, die von oben auf den Stapel oder die Stapel von Transport- und Lagervorrichtungen aufgesetzt oder aufsetzbar ist. Auf diese Weise lässt sich das Transport- und Lagersystem unabhängig von seiner Orientierung einfach mittels Flurförderzeugen handhaben. Vorteilhafter Weise ist zudem ein Mittel zum Verspannen der beiden Paletten gegeneinander oder zum Verrasten der einzelnen Komponenten miteinander vorgesehen.

Ein weiterer, ggf. separat zu beanspruchender Aspekt der Erfindung betrifft ein Verfahren zur Käsereifung das zumindest die folgenden Schritte aufweist:
- Platzieren von Käse in eine Anzahl von stapelbaren Transport- und Lagervorrichtungen, dies können bevorzugt Transport- und Lagervorrichtungen gemäß einem der vorgenannten Aspekte sein;
- Stapeln der gefüllten Transport- und Lagervorrichtungen; und
- Wenden des Stapels von Transport- und Lagervorrichtungen im Ganzen in vorbestimmten Abständen (und für eine vorbestimmte Reifungsdauer).

Bevorzugt kann das Verfahren zur Käsereifung zusätzlich zumindest einen der folgenden Schritte aufweisen:
- Platzieren des Stapels (oder mehrerer Stapel) von Transport- und Lagervorrichtungen auf einer Palette; und
- Platzieren einer (zweiten, umgekehrten) Palette auf dem obersten Behälter des Stapels (der Stapel) von Transport- und Lagervorrichtungen.

Die Erfindung wird im Folgenden unter Bezugnahme auf die beigefügten Figuren näher beschrieben.

### Kurzbeschreibung der Figuren

Fig. 1 ist eine perspektivische Darstellung zur Veranschaulichung einer Transport- und Lagervorrichtung sowie eines Systemaufbaus gemäß einem ersten Ausführungsbeispiel der vorliegenden Offenbarung;
Fig. 2 ist eine Frontansicht einer Transport- und Lagervorrichtung gemäß der ersten Ausführungsform;
Fig. 3 ist eine Seitenansicht einer Transport- und Lagervorrichtung gemäß der ersten Ausführungsform;
Fig. 4 ist eine Draufsicht einer Transport- und Lagervorrichtung gemäß der ersten Ausführungsform;
Fig. 5 ist eine geschnittene Seitenansicht zweier gestapelter Transport- und Lagervorrichtungen gemäß der ersten Ausführungsform in einer ersten Orientierung;
Fig. 6 ist eine geschnittene Seitenansicht zweier gestapelter Transport- und Lagervorrichtungen gemäß der ersten Ausführungsform in einer zweiten Orientierung;
Fig. 7 ist eine perspektivische Ansicht eines erfindungsgemäßen Transport- und Lagersystems in einer aufrechten Orientierung; und
Fig. 8 ist eine perspektivische Ansicht eines erfindungsgemäßen Transport- und Lagersystems in einer umgedrehten / gewendeten Orientierung.

### Beschreibung der Ausführungsbeispiele

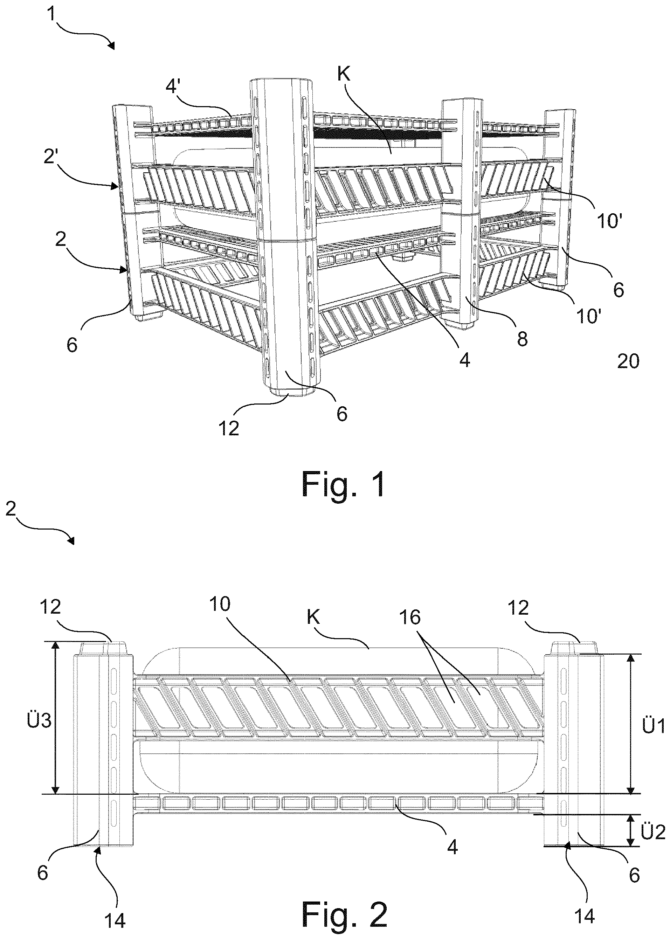

In Fig. 1 ist eine erste Ausführungsform einer erfindungsgemäßen Transport- und Lagervorrichtung 2 bzw. eines Käsetrays dargestellt. Genauer gesagt sind zwei erfindungsgemäße Transport- und Lagervorrichtungen 2, 2' bzw. Käsetrays abgebildet, die übereinandergestapelt eine Art modulares Regalsystem zur Käsereifung bilden. Jede der Transport- und Lagervorrichtungen 2, 2' hat eine Lagerplatte 4, 4', die beim Übereinanderstapeln mehrerer Transport- und Lagervorrichtungen 2, 2' regalbrettartige Lagerflächen für die Lagerung eines Käselaibes K bilden. Für die Käsereifung ist es wichtig, den Käse in regelmäßigen Abständen zu wenden. Dies geschieht im Stand der Technik bislang von Hand. Mit den dargestellten Transport- und Lagervorrichtungen 2, 2' bzw. dem dargestellten modularen Transport- und Lagerungssystem 1 lässt sich dieser Vorgang leichter automatisieren und das Handling kann vereinfacht werden. Die gestapelten modularen Käseregale lassen sich auf einfache Weise als kompletter Stapel wenden, wie an späterer Stelle im Detail erläutert wird. Zugleich können die einzelnen Transport- und Lagervorrichtungen 2, 2' aber als separate Kästetrays für den Transport der Käselaibe verwendet werden. Der modulare Aufbau hat den zusätzlichen Vorteil, dass die einzelnen Transport- und Lagervorrichtungen 2, 2' nach Gebrauch in einer Behälterwaschanlage automatisiert reinigbar sind. Dies vermindert den Reinigungsaufwand im Vergleich mit herkömmlichen Regalsystemen erheblich.

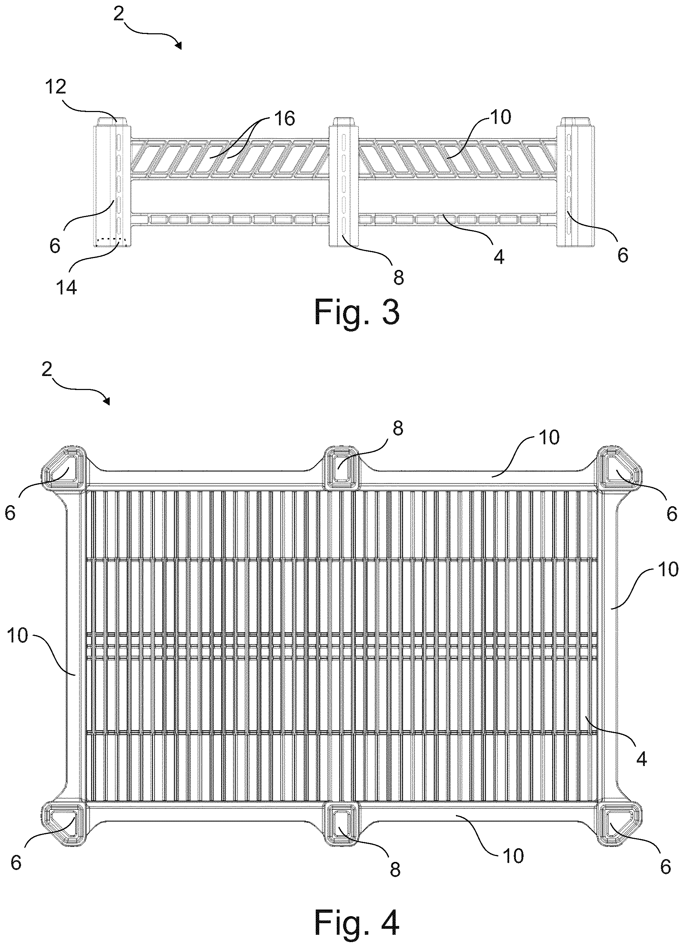

Die Lagerplatte 4 der Transport- und Lagervorrichtung 2 wird von einer Anzahl von (hier sechs) Säulen oder Stützelementen 6, 8 getragen. Es sind vier Ecksäulen 6 und zwei mittig an den langen Seitenrändern der Lagerplatte 4 angeordnete zusätzliche Säulen 8 vorgesehen. Dabei ist die Lagerplatte 4 mit einem definierten Abstand zu den Säulenfüßen aufgehängt (vgl. Fign. 2 und 3), sodass unter der Lagerplatte 4 ein Freiraum entsteht. Dies gewährleistet eine ausreichende Belüftung von unten während der Reifung des Käses K. Zur Unterstützung der Luftzirkulation ist die Lagerplatte 4 perforiert. Im dargestellten bevorzugten Ausführungsbeispiel ist die Lagerplatte 4 nach Art eines Gitterrosts ausgebildet, um die Luftzufuhr zum Käse K zu maximieren. Um eine gute Stapelbarkeit zu gewährleisten, sind die Säulen 6, 8 in vertikaler Richtung gleich bemessen.

In der in den Figuren dargestellten bevorzugten Ausführungsform sind die Oberseite und die Unterseite der Lagerplatte 4 identisch ausgeführt. Dies hat den Hintergrund, dass nach einem Wenden des Stapels bzw. der durch die Käsetrays 2, 2' gebildeten Regalsäule die Käselaibe auf den vormaligen Unterseiten der Lagerplatten 4 aufliegen. Die identische Ausgestaltung der Ober- und der Unterseite der Lagerplatten stellt hier eine ausgewogene Käsereifung unabhängig von der Orientierung des Stapels sicher. Offensichtlich reicht es aus, wenn Ober- und Unterseite weitestgehend identisch sind, sodass die Belüftungsbedingungen der aufliegenden Käseseite in beiden Orientierungen des modularen Transport- und Lagerungssystems 1 äquivalent sind.

Die Säulen 6, 8 ragen, wie in Fig. 2 gut zu sehen ist, nach oben über die Lagerplatte 4 hinaus. Die Summe der Überstände Ü1 und Ü2 der Säulen 6, 8 nach oben und nach unten über die Flächen der Lagerplatte 4 hinaus definiert im gestapelten Zustand den Abstand zwischen den einzelnen Lagerplatten 4. Da die Säulen 6, 8 in beide Richtungen überstehen, kann ein Regalstapel mit mehreren erfindungsgemäßen Transport- und Lagervorrichtungen 2, 2' sowohl aufrecht als auch umgekehrt/umgedreht aufgestellt werden und es verbleibt immer ein Freiraum zwischen der untersten Lagerplatte 4 und dem Boden.

Wie beispielsweise in Fig. 1 gut zu erkennen ist, sind jeweils zwischen benachbarten Säulen 6, 8 verlaufend Randleisten 10 vorgesehen, die den Käse K seitlich in der Transport- und Lagervorrichtung 2 sichern und beim Wenden eines Stapels von Transport- und Lagervorrichtungen 2 ein Herausfallen der Käselaibe K verhindert. Die Randleisten 10 sind in Säulenlängsrichtung gesehen derart an den Säulen 6, 8 aufgehängt, dass im gestapelten Zustand der Transport- und Lagervorrichtungen 2, 2' ein Luftspalt sowohl zwischen der Randleiste 10 und der Lagerplatte 4 derselben Transport- und Lagervorrichtung 2 als auch zwischen der Randleiste 10 und der Lagerplatte 4' der unmittelbar darüber gestapelten Transport- und Lagervorrichtung 2' definiert wird. In der dargestellten bevorzugten Ausführungsform ist die vertikale Höhe der Randleisten 10 so gewählt, dass diese mittig zwischen den einander zugewandten Flächen der Lagerplatten 4, 4' zweier gestapelter Transport- und Lagervorrichtungen 2, 2' angeordnet sind. Die Randleisten 10 selbst sind zudem mit zahlreichen Lüftungsschlitzen 16 versehen, um eine optimale Belüftung des reifenden Käses bereitzustellen. Die Randleisten 10 sind, wie man bspw. in der Fig. 1 erkennen kann, nach außen hin gerippt ausgebildet und weisen nach innen hin eine mit den Lüftungsschlitzen 16 versehene Fläche auf. Die flächigere Ausführung der Innenseite der Randleisten 10 vermeidet Abdrücke in den Seitenflächen des Käses während die Verrippung der Randleiste 10 zusätzliche Steifigkeit verleiht.

Die Säulen 6, 8 der dargestellten Ausführungsform der Erfindung weisen an ihren oberen und unteren Enden jeweils komplementäre Stapelgeometrien 12, 14 auf. Am oberen Ende jeder Säule ist hier ein Stapelvorsprung 12 ausgebildet, während am Säulenfuß eine entsprechende Stapelausnehmung 14 vorgesehen ist. Diese Anordnung kann natürlich auch vertauscht werden. Die Stapelvorsprünge 12 tauchen beim Stapeln zweier erfindungsgemäßer Transport- und Lagervorrichtungen 2, 2' ineinander ein und bilden einen Formschluss quer zur Säulenlängsrichtung, sodass ein bündiger und stabiler Stapel von Transport- und Lagervorrichtungen 2, 2' entsteht.

In der Draufsicht der Figur 4 ist gut zu erkennen, dass die Säulen 6, 8 seitlich (horizontal) über den Rand der Lagerplatte 4 hinausragen. Dies hat den vorteilhaften Effekt, dass der auf der Lagerplatte 4 gelagerte Käse K besser gegen seitliche Stöße und dergleichen abgeschirmt wird. Zudem sieht man in der Draufsicht der Figur 4, dass die Randleisten 10 bündig mit den Innenflächen der Säulen 6, 8 ausgebildet sind, sodass ein rechteckiger Käfig zur Aufnahme eines Käselaibes definiert wird.

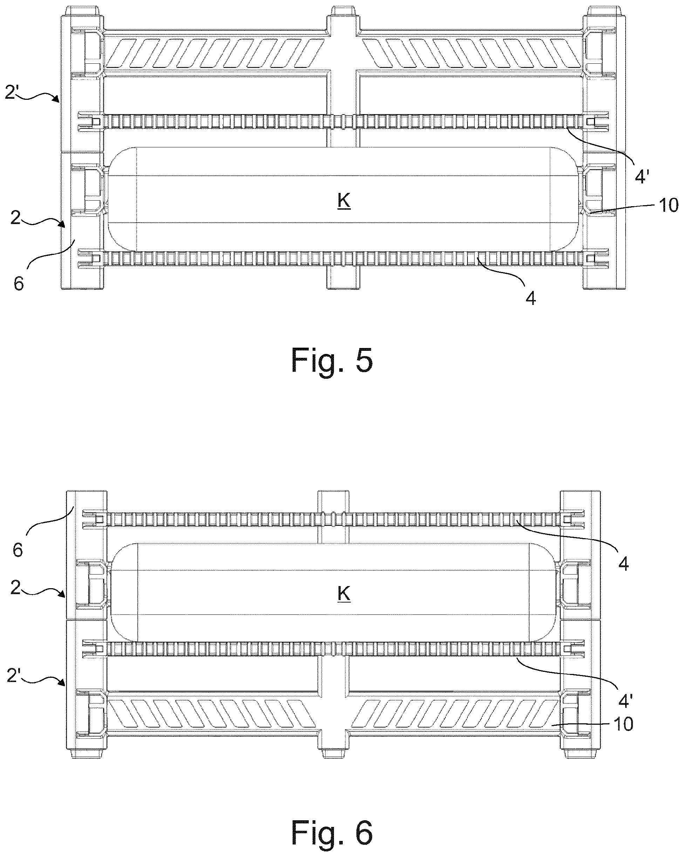

In den geschnittenen Seitenansichten zweier gestapelter Transport- und Lagervorrichtungen der Figuren 5 und 6 ist gut zu sehen, wie sich der Käse K beim Umdrehen gestapelter erfindungsgemäßer Transport- und Lagervorrichtungen 2, 2' verhält und wie die Transport- und Lagervorrichtungen 2, 2' konstruktiv für den Wendevorgang angepasst sind. Fig. 5 zeigt zwei gestapelte Transport- und Lagervorrichtungen 2, 2' in einer ersten Orientierung, während Fig. 6 dieselben Transport- und Lagervorrichtungen 2, 2' in einer zweiten, umgekehrten Orientierung zeigt. Sowohl der Abstand der Lagerplatten 4, 4' der gestapelten Transport- und Lagervorrichtungen 2, 2' als auch die Abstände der Randleisten 10 sind auf in der industriellen Käseproduktion gängige Maße (hier das Euroblock Format) abgestimmt. Im vorliegenden Fall ist der Behälter in der Länge mit 600 mm und in der Breite mit 400 mm bemaßt. Hierdurch ergibt sich ein geringes seitliches Spiel zwischen Käselaib K und Randleisten 10, wodurch ein Herumrutschen des Käses K beim Transport oder beim Wenden minimiert wird. Die lichte Weite zwischen den Lagerplatten 4, 4' zweier gestapelter Transport- und Lagervorrichtungen 2, 2' kann bevorzugt in einem Bereich zwischen 110 mm und 150 mm, besonders bevorzugt 125 mm bis 135 mm ausgewählt werden, um die Fallhöhe des Käses beim Wenden minimal zu halten zugleich aber einen ausreichenden Luftspalt zur nach oben benachbarten Lagerplatte 4' zu bilden. Wie in Fig. 2 gut zu erkennen ist, ist der vertikale Überstand Ü3 der Säulen 6, 8 (samt Stapelvorsprung 12) über die Lagerplatte 4 hinaus derart angepasst, dass der Käse in seiner gesamten Höhe von den Säulen 6, 8 abgeschirmt wird. In anderen Worten ist der Überstand Ü3 käsehoch bzw. geringfügig höher als eine Käsehöhe (hier 120 mm) ausgelegt.

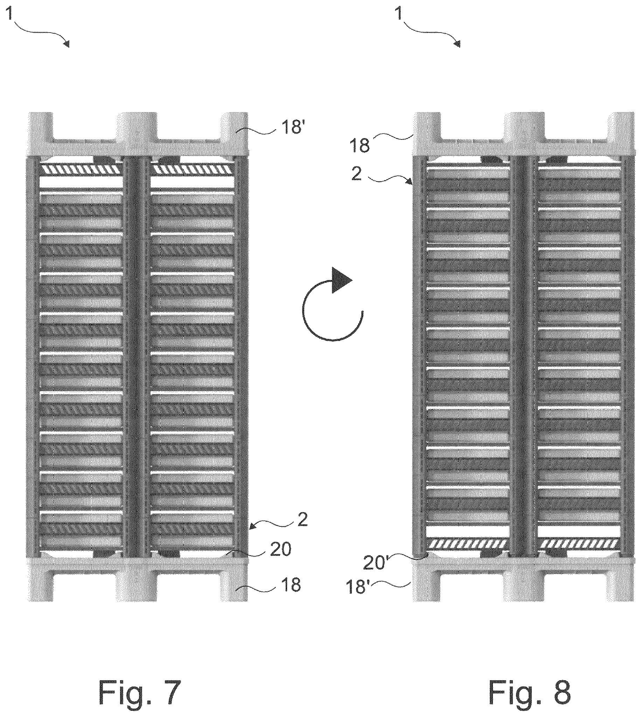

Ein erfindungsgemäßes modulares Transport- und Lagersystem 1, wie es in Fig. 7 abgebildet ist, kann zusätzlich zu einer Anzahl gestapelter Transport- und Lagervorrichtungen 2 eine Palette 18 aufweisen, die zur Aufnahme der Transport- und Lagervorrichtungen 2 angepasst ist. In der dargestellten Ausführungsform der Fign. 7 und 8 weist die Palette 18 spezielle Aufnahmen 20 auf, mittels derer vier Transport- und Lagervorrichtungen 2 horizontal benachbart (in Karree-förmiger Anordnung) in einen formschlüssigen Eingriff mit dem Deck der Palette 18 gebracht werden können. Das dargestellte modulare Transport- und Lagersystem 1 weist zudem eine zweite, auf der Oberseite des Stapels in einer gegenüber der ersten Palette umgekehrten Orientierung angeordnete zweite Palette 18' auf. Das dargestellte Transport- und Lagersystem 1 hat also vier benachbarte Stapel von erfindungsgemäßen Transport- und Lagervorrichtungen 2, die sandwichartig zwischen zwei Paletten 18, 18' angeordnet bzw. eingespannt sind. Das gesamte Transport- und Lagersystem 1 lässt sich so in beiden Orientierungen mit einem Flurförderzeug transportieren und ist zudem für ein automatisiertes Wenden vorbereitet. Figur 8 zeigt den Stapel aus Fig. 7 samt Paletten 18, 18' in einer umgekehrten Orientierung.

Im Folgenden wird ein Verfahren zur Käsereifung mit einem erfindungsgemäßen modularen Transport- und Lagersystem 1 kurz beschrieben. Der zur Reifung vorgesehene Käse K wird zunächst in die einzelnen Transport- und Lagervorrichtungen 2 befüllt. Die Transport- und Lagervorrichtungen 2 werden anschließend aufeinandergestapelt. Jeweils vier solcher Stapel werden auf eine Palette 18 gepackt und eine weitere Palette 18' wird in umgekehrter Ausrichtung von oben auf den Stapeln angeordnet. Die beiden Paletten 18, 18' werden anschließend fixiert bzw. gegeneinander verspannt, sodass aufgrund des formschlüssigen Eingriffs zwischen den jeweils benachbarten Transport- und Lagervorrichtungen 2 sowie zwischen den Paletten 18, 18' und den Transport- und Lagervorrichtungen 2 das gesamte Transport- und Lagersystem 1 fixiert ist. Das so fixierte Transport- und Lagersystem 1 wird in vorbestimmten Abständen (bspw. 1 Woche) für eine vorbestimmte Reifungszeit als Gesamtpaket gewendet.

### Bezugszeichen

- 2: Transport- und Lagervorrichtung;
- 4: Lagerplatte;
- 6: Ecksäule;
- 8: Säule;
- 10: Randleiste;
- 12: Stapelgeometrie / Stapelvorsprung;
- 14: Stapelgeometrie / Stapelausnehmung;
- 16: Lüftungsschlitze;
- 18: Palette; und
- 20: Aufnahmen.

## Patentansprüche

1. Transport- und Lagervorrichtung (2) für die Käsereifung mit einer horizontalen Lagerplatte (4), die von einer Anzahl vertikaler, nach oben und nach unten über die Lagerplatte überstehender Stützelemente (6, 8), insbesondere Säulen (6, 8), getragen wird und zumindest einer Randleiste (10) zwischen benachbarten Stützelementen (6, 8) zur seitlichen Sicherung von auf der Lagerplatte (4) platziertem Käse; wobei
zumindest eines der Stützelemente (6, 8) an seinem oberen und an seinem unteren Ende ein Paar komplementärer Stapelgeometrien (12, 14) aufweist, die dazu ausgebildet sind, in entsprechende Stapelgeometrien (12', 14') einer baugleichen oder ähnlichen Transport- und Lagervorrichtungen (2') formschlüssig einzugreifen.

2. Transport- und Lagervorrichtung (2) gemäß Anspruch 1, **dadurch gekennzeichnet, dass** die Lagerplatte (4) rechteckförmig ausgebildet ist, und zumindest von vier in ihren Ecken angeordneten Eckstützen (6), vorzugsweise Hohlsäulen, getragen wird.

3. Transport- und Lagervorrichtung (2) gemäß Anspruch 2, **dadurch gekennzeichnet, dass** die zumindest eine Randleiste (10) sich zwischen zwei an den Ecken der Lagerplatte (4) angeordneten Eckstützen (6) erstreckt.

4. Transport- und Lagervorrichtung (2) gemäß Anspruch 3, **gekennzeichnet durch** vier jeweils zwischen zwei Eckstützen (6) verlaufenden Randleisten (10), die die Lagerplatte (4) zu jeder ihrer Randseiten hin begrenzen.

5. Transport- und Lagervorrichtung (2) gemäß einem der Ansprüche 2 bis 4, **dadurch gekennzeichnet, dass** die zumindest eine Randleiste (10) mit einem Abstand zur Bodenplatte (4) zwischen den Eckstützen (6) verlaufend angeordnet ist, sodass ein vorbestimmter Spalt zwischen der Lagerplatte (4) und der Randleiste (10) definiert wird.

6. Transport- und Lagervorrichtung (2) gemäß einem der Ansprüche 1 bis 5, **dadurch gekennzeichnet, dass** die Stützelemente (6 ,8) in horizontaler Richtung über den Rand der Lagerplatte (4) vorspringen.

7. Transport- und Lagervorrichtung (2) gemäß einem der Ansprüche 1 bis 6, **dadurch gekennzeichnet, dass** in der zumindest einen Randleiste (10) Lüftungsschlitze (16) vorgesehen sind.

8. Transport- und Lagervorrichtung (2) gemäß einem der Ansprüche 1 bis 7, **dadurch gekennzeichnet, dass** die Randleiste (10) in vertikaler Richtung derart angeordnet ist, dass sie beim Stapeln zweier baugleicher Transport- und Lagervorrichtungen (2) mittig zwischen deren Lagerplatten (4, 4') positioniert ist.

9. Transport- und Lagervorrichtung (2) gemäß einem der Ansprüche 1, **dadurch gekennzeichnet, dass**, die Lagerplatte (4) gitterrostförmig ausgebildet ist und insbesondere an ihrer Ober- und ihrer Unterseite eine identische Lagerfläche ausbildet.

10. Transport- und Lagervorrichtung (2) gemäß einem der Ansprüche 1, **dadurch gekennzeichnet, dass** Lagerplatte (4), Stützelemente (6, 8) und Randleiste (10) stoffeinstückig, insbesondere aus Kunststoff, vorzugsweise in einem Spritzguss- oder Rotomouldingverfahren, hergestellt sind.

11. Modulares Transport- und Lagersystem (1) für die Käsereifung mit einer Anzahl von Transport- und Lagervorrichtung (2, 2') gemäß einem der Ansprüche 1 bis 10 und einer Palette (18), die dazu ausgebildet ist, einen formschlüssigen Eingriff mit den Stapelgeometrien (14) der Transport- und Lagervorrichtungen (2, 2') einzugehen.

12. Modulares Transport- und Lagersystem für die Käsereifung gemäß Anspruch 12, **dadurch gekennzeichnet, dass** die Palette (18) dazu angepasst ist, vier Stapel von Transport- und Lagervorrichtungen (2, 2') aufzunehmen.
